Europäisches Patentamt

European Patent Office

Office européen des brevets

(19)

(11) **EP 1 207 496 A1**

(12) **EUROPEAN PATENT APPLICATION**
published in accordance with Art. 158(3) EPC

(43) Date of publication:
**22.05.2002 Bulletin 2002/21**

(21) Application number: **01922074.8**

(22) Date of filing: **24.04.2001**

(51) Int Cl.7: **G06T 1/00**

(86) International application number:
**PCT/JP01/03546**

(87) International publication number:
**WO 01/84496 (08.11.2001 Gazette 2001/45)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.04.2000 JP 2000127605**

(71) Applicant: **Tohoku Techno Arch Co., Ltd.**
**Sendai-shi, Miyagi 980-0845 (JP)**

(72) Inventor: **OKATANI, Takayuki**
**Sendai-shi, Miyagi 982-0011 (JP)**

(74) Representative: **Weber, Dieter, Dr. et al**
**Weber, Dieter, Dr.,**
**Seiffert, Klaus, Dipl.-Phys.,**
**Lieke, Winfried, Dr.,**
**Gustav-Freytag-Strasse 25**
**65189 Wiesbaden (DE)**

(54) **APPARATUS FOR CONSTITUTING THREE-DIMENSIONAL MODEL**

(57)     In the present invention, attitudes of a camera 30 are read by a gyro sensor unit 34, and a PC 10 performs necessary image processing and calculates the positions of the camera 30. Contours of a body are acquired at optional points of view for photographing by freely changing the positions and attitudes of the camera. The positions of the camera are calculated by acquiring a plurality of images and attitudes by capturing the body from a plurality of positions and attitudes and by using the contours of the body on the images. A three-dimensional shape is formed again from the positions of the camera and the contours of the body.

FIG. 1

EP 1 207 496 A1

**Description**

TECHNICAL FIELD

The present invention relates to a three-dimensional model forming apparatus for forming a three-dimensional model of various bodies.

BACKGROUND ART

A three-dimensional model mainly uses data of a three-dimensional shape of a body and (the image) of the pattern of a surface as data. It is possible to freely synthesize an image of a body on a computer, when the body is viewed from an optional direction. A large amount of a demand exists for a method capable of acquiring a three-dimensional model easily. Methods of capturing a three-dimensional model of various bodies into a computer will be described below.

Many studies have been performed as to a method of forming a three-dimensional model from the contours that are acquired when a body is viewed from a plurality of directions. Among them, a method of turning a body to be handled on a turntable and acquiring a three-dimensional model by obtaining a series of images by a fixed camera has been in practical use. The method permits a relatively excellent result to be acquired without the need of a large apparatus.

There are methods of restoring a shape of a body from contours that are acquired when the body is viewed from a plurality of directions (shape-from-silhouette method). Well known is a system for restoring the three-dimensional shape of a body to be handled by turning the body using a turntable and capturing contours thereof by a fixed camera, and this system has become commercial. These already-existing methods employing the turntable have the following drawbacks.

· Limitation to an object as a subject
    An object, which is heavy or immovable and cannot be placed on a turntable, cannot be handled.
· Limitation to a direction in which a body is observed
    It is very important in the shape-from-silhouette method to use contours acquired by observing a body from angles as many as possible. The methods of using a turntable are insufficient in this respect because the positions of a point of view are limited.

One of the drawbacks of the aforementioned methods of restoring the shape of a body from contours thereof resides in that the shape of a concave portion of the surface of the body cannot be restored. More correctly, when the surface of a body to be handled includes a portion both the main curvatures of which are negative, the portion cannot be correctly restored. Thus, the shape of the body is restored by replacing only just the portion with a convex hull.

However, this is only an ideal case. Actually, when a portion one of the curvatures of which is negative is located on the surface of a body to be handled and further contours of the body are viewed only from the directions having the negative curvature because directions in which the body is viewed are not sufficiently changed, the portion cannot be correctly restored. Thus, this portion is also acquired as a shape like a convex hull (visual hull effect). When a camera is fixed and a body to be handled is turned on a turntable, this problem is liable to occur how finely each rotating angle is set because angles at which the body is observed are limited. To avoid this problem, it is desired to acquire images from all the angles of the periphery of a body.

For this purpose, it is necessary to freely change the position and attitude of a camera and further to correctly know the values of them. A method of it is to determine characteristic points on the surface of a background image and a body to be handled itself and to restore the positions and attitudes of a camera in pursuit of or correspondence to the characteristic points based on an idea of structure from motion. For example, Niem et al propose to dispose a calibration pattern around a body to be handled, to restore the positions and attitudes of a camera from images and to create a three-dimensional model based on them.

There is case in the method that it is difficult to extract characteristic points and to cause them to correspond to each other. Further, the necessity of the calibration pattern narrows the scope of application. For example, it is sufficient to photograph even a large body composed of a structure such as a building, an automobile, and the like while moving a camera therearound. Thus, it will be a great advantage in this case to make it unnecessary to use a calibration pattern.

An object of the present invention is to solve the aforementioned problems and to restore a three-dimensional shape by acquiring contours of a body from absolutely free points of view.

DISCLOSURE OF THE INVENTION

To achieve the above object, the present invention is characterized in a three-dimensional model forming apparatus for forming a three-dimensional model from images of a body to be handled, the apparatus comprising a camera for acquiring images of the body to be handled; an attitude sensor for acquiring the attitude information of the camera when the images are acquired; and a processing means for storing and processing the images and the attitude information that have been acquired, wherein the processing means calculates the positions of the camera when the respective images are acquired from the plurality of images and the attitude information that have been acquired; and the three-dimensional model of the body to be handled is formed using the calculated positions of the camera and the contours of the body to be handled resulting from the acquired images.

With this arrangement, there can be provided a three-dimensional model forming apparatus that restores a three-dimensional shape by acquiring the contours of a body at entirely free points of view. The attitude sensor may be composed of a gyro sensor.

The processing for calculating the positions of the camera when the respective images are acquired from the plurality of images and the attitude information that have been acquired comprises the steps of projecting the images of the contours of other image onto the respective images using the attitude information of the camera; calculating lines one ends of which start from the center of projection of the other image on the respective images and which come into contact with the contours; recalculating the positions of the camera so that the lines, which come into contact with the respective contours, are made equal to each other; and calculating the positions by repeating these steps until they are converged.

BRIEF DESCRIPTION OF THE DRAWINGS

FIG. 1 is a view showing the arrangement of a system of an embodiment of the present invention.

FIG. 2 is a flowchart showing a process performed by the embodiment of the present invention.

FIG. 3 is a view showing how an image is acquired.

FIG. 4 is a view showing that the contours between images at points of view i and j are superimposed.

FIG. 5 is a view in which a silhouette cone formed by a contour at the point of view j is projected onto an image at the another point of view i.

FIG. 6 is a view in which an epipole at the point of view i when it is viewed from an image at the point of view j is located within the inside of the contour at the point of view j.

FIG. 7 is a view in which the contour of a body on an image at the point of view i is inscribed on two straight lines.

FIG. 8 is a flowchart showing algorithm for determining a position of a camera.

FIG. 9 shows two straight lines created when the silhouette cone of the contour at the point of view j is projected onto the surface of the image at the point of view i and points P and Q located on the contour to provide the two straight lines.

FIG. 10 is a view showing the two straight lines located outermost of the straight lines that pass through an epipole and intersect a contour and points M and N at which the two straight lines intersect the contour.

FIGS. 11 three-dimensionally shows the restored positions of a camera.

FIG. 12 shows some of the images acquired from the models of a hand and a duck.

FIG. 13 shows restored results of the models of the hand and the duck.

BEST MODE OF CARRYING OUT THE INVENTION

A three-dimensional model forming apparatus for creating a three-dimensional model from an image using a gyro-sensor, which is one of embodiments of the present invention, has the following features. That is, as to the attitude of a position and attitude of a camera, the position of the camera is acquired by obtaining information from outside of the camera and determined using only a contour of a body on a photographed image. The information of the attitude of the camera is acquired by mounting the gyro-sensor on the camera. With this operation, a three-dimensional model can be obtained by photographing images while freely moving a point of view around a body to be handled.

The embodiment of the present invention will be described below in detail with reference to the drawings.

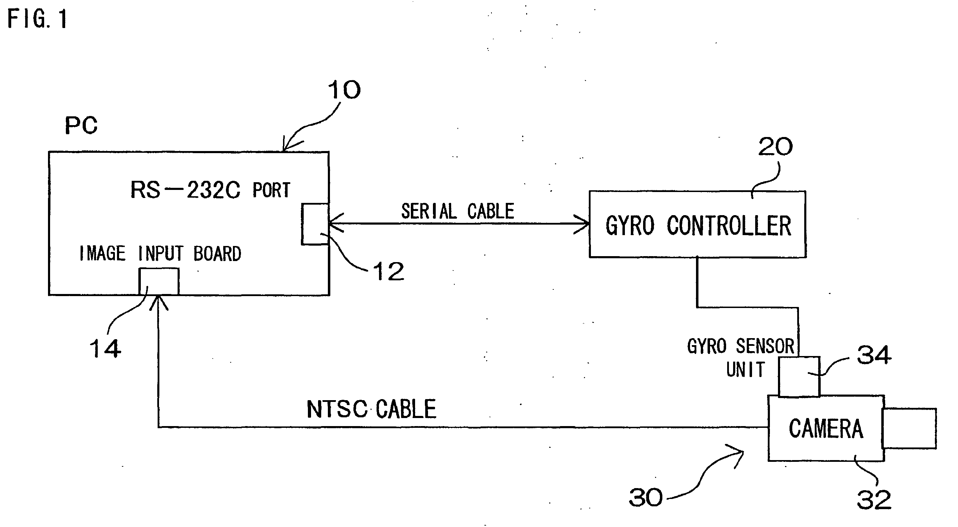

FIG. 1 is a view showing the arrangement of a system as the embodiment of the three-dimensional model forming apparatus. The three-dimensional model forming apparatus of FIG. 1 is roughly composed of three sections, that is, a personal computer (PC) system 10, a gyro controller 20, and a camera 30. A gyro sensor unit 34 is mounted on the camera main body 32, which acts as a photographing unit, of the camera 30. The image input.board 14 of the PC 10 is connected to the camera main body 32 through an NTSC cable, and an RS-232C port 12 is connected to the gyro controller 20 through a serial cable. The gyro controller 20 is also connected to the gyro sensor unit 34.

In the system, the PC 10 performs necessary image processing and calculates a position of the camera 30. The gyro sensor unit 34 mounted on the video camera main body 32 is caused to read an attitude of the camera 30, and data such as the attitude of the camera 30, and like is transmitted between the gyro controller 20 connected to the gyro sensor unit 34 and the PC 10 through the serial cable. The attitudes of respective points of view, when an image is obtained, are acquired by the gyro sensor unit 34 from the outside of the camera main body 32. A procedure is taken such that a plurality of images are acquired by capturing a body from a plurality of positions and attitudes, the positions of the camera are acquired using the contours of the body on the images, and the three-dimensional shape of the body is rearranged from the contours.

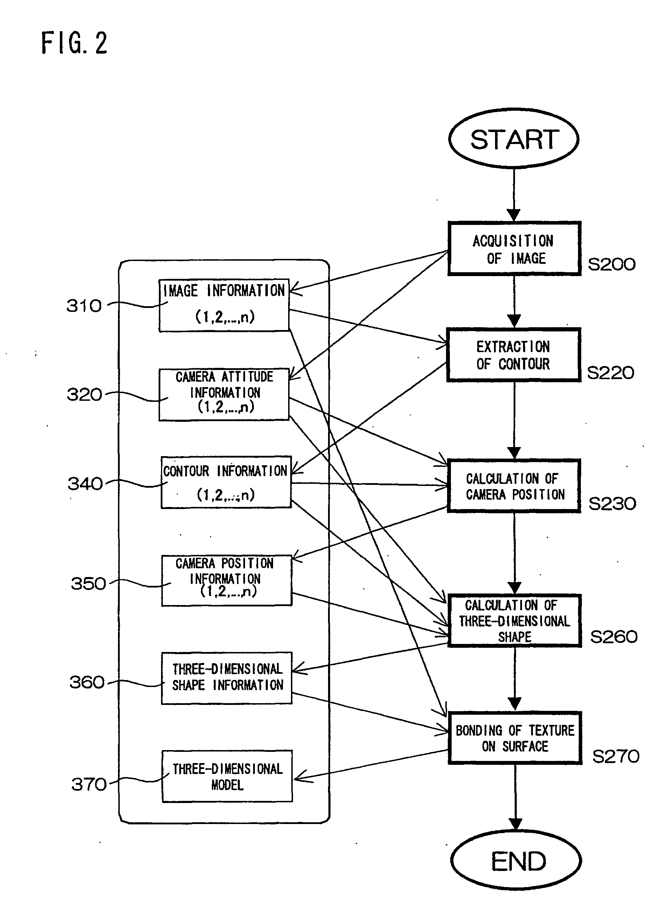

FIG. 2 is an overall view sequentially showing the steps of the system.

In FIG. 2, a plurality of image information 310 is acquired from the camera 30 as well as the camera attitude information 320 of each image is also acquired (S200). The contour information 340 of respective target bodies is allocated from the thus acquired plurality of image information 310 (S220). The allocation process is performed based only on color information by setting, for example, a background to only one color of blue in order to allocate the contour of the body to be handled from the background. Note that any process other than the above may be employed to extract the contour

A position of the camera is calculated from the allocated contour information 340 and the camera attitude information 320 (S230), and camera position information 350 in photographing is acquired for each image. The three-dimensional shape information 360 of the target body is acquired from the contour information 340 and the camera position information 350 (S260). Three-dimensional model information 370 is acquired by bonding a texture to this shape (S270).

Respective steps performed until the three-dimensional model of the body to be handled is acquired will be described below in detail in consideration of the flow of the steps shown in FIG. 2.

<Acquisition of image (S200)>

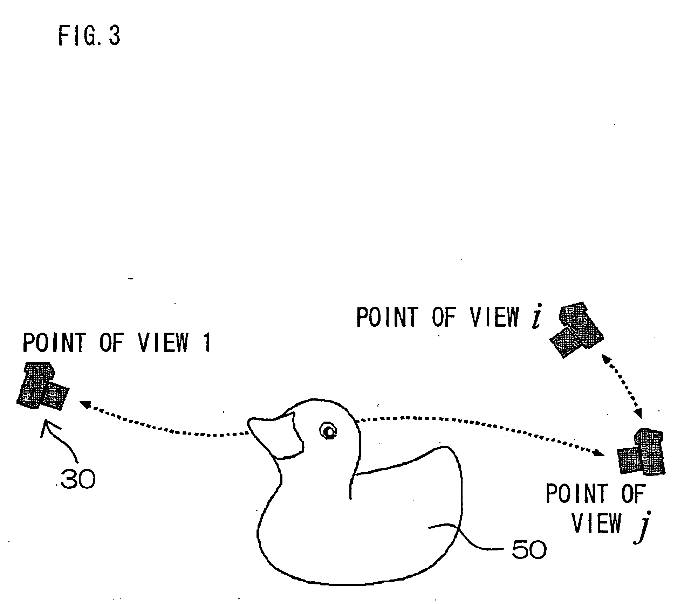

FIG. 3 shows how image is acquired (S200). As shown in FIG. 3, a plurality of images are acquired by photographing a body 50 as a subject by the camera 30 from various points of view. A plurality of still images are photographed from various directions by the camera 30 while freely moving the points of view of the camera 30 around the body 50 as a subject, the camera 30 being capable of acquiring attitude information by mounting the gyro sensor unit 34 on the camera main body 32. The point of view at this time is represented by i (i = 1, ..., n). At the time, images are captured into the PC 10 as well as the attitudes of the camera 30 are simultaneously acquired by the gyro sensor unit 34 so that the images are recorded in correspondence to the attitudes of the camera.

<Calculation of camera position (S230)>

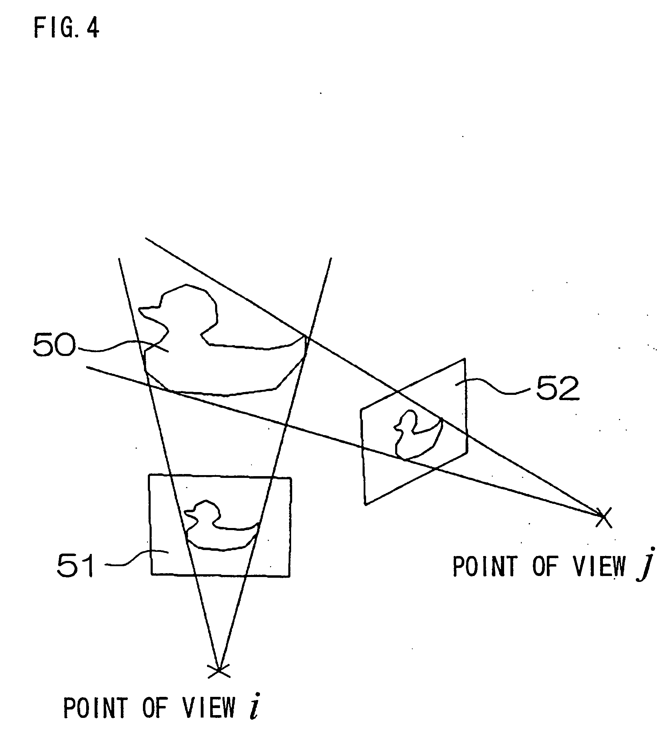

Calculation of a camera position (S230) will be described in detail using FIGS. 4 to 10.

FIG. 4 shows that the contours between images at points of view i and j are superimposed. The body 50 as a subject is arranged as an image 51 at the point of view i and as an image 52 at the point of view j. To explain briefly, in order to determine the position of the camera, the position of the camera in photographing is calculated using the contours allocated in the respective images 51 and 52 and the camera attitude information corresponding to the points of view of the contours. As in the example of FIG. 4, the projective transformation of an image is performed by perspective projection. Since the internal parameter of the camera main body 32, that is, the attitude of camera is known, contours can be acquired by projecting a body onto images by the perspective projection. Conversely, the images, which are acquired by inversely projecting the contours into a three-dimensional space, are superimposed on each other when the camera is located at the position where photographing was performed, whereby a silhouette cone, which has an apex at the center of projection and is in contact with the surface of the body, is formed. The positions of the camera, at which all the images were photographed, are determined based on this principle in a comprehensive manner.

When images are acquired from a plurality of positions and attitudes, the contours of a body on the respective images form a plurality of different silhouette cones. In the system, the positions of the camera 30 when the images were obtained are determined by superimposing the silhouette cone. Since the attitudes of the camera 30 in photographing are given, points of view are moved, respectively in parallel with each other so that the plurality of silhouette cones are superimposed. With this operation, the positions can be determined.

However, the positions are not determined perfectly, and a certain degree of freedom remains. When, for example, there are only two points of view and only two images, there are innumerable number of superimposing methods. This is because that even if one of the points of view is fixed and only the position of the other point of view is changed, there are only two restrictions which can be obtained by superimposition with respect to a degree of freedom of position = 3. This has the same meaning as that when a body having a double size is observed from respective points of view apart from the body a double distance, the same image can be obtained. It is impossible in principle to determine the absolute size of a body.

This is the same even if three or more points of view are available. However, the relative positions of three points of view are determined perfectly except a degree of freedom, which is not determined, as to the size of a body. It is assumed, for example, that the positions of two points of view are determined and further a third image and a third attitude are given. When a third silhouette cone is perfectly superimposed on two silhouette cones having been determined, the position of the third silhouette cone can be perfectly determined. This is because that since each two restrictions can be obtained with respect to the two fixed silhouette cones, the number of restrictions is set to 3. The three existing degrees of freedom are rather exceeded in this case, a certain type of optimization is necessary when an error is contained.

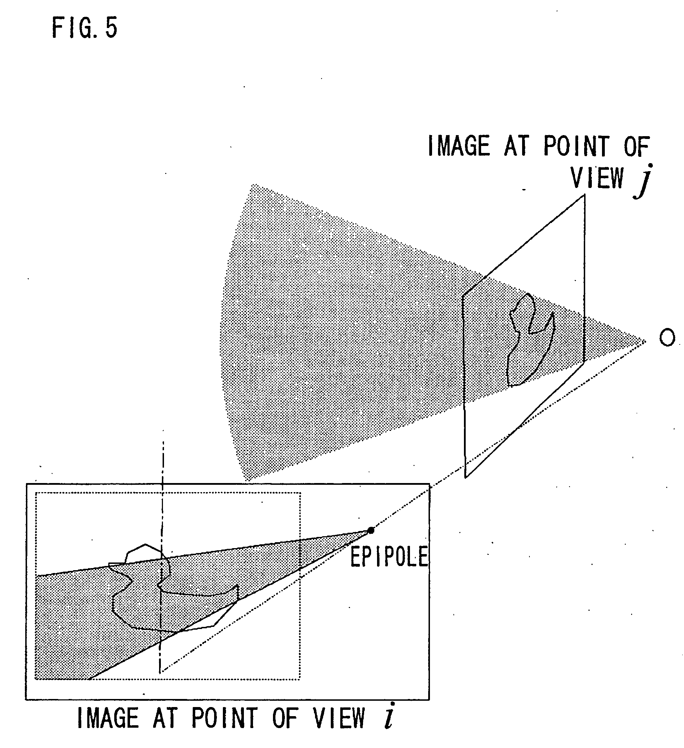

FIG. 5 is a view showing that a silhouette cone formed by a contour at a certain point of view j is projected onto an image at another point of view i. The point of view is represented by i (i = 1, ..., n). When the silhouette cone formed by the contour of the certain point of view j is viewed from the another point of view i, a region surrounded by two straight lines is ordinarily obtained as shown in FIG. 5. The extreme point of these two straight lines on the image at the point of view i is the epipole of the point of view j.

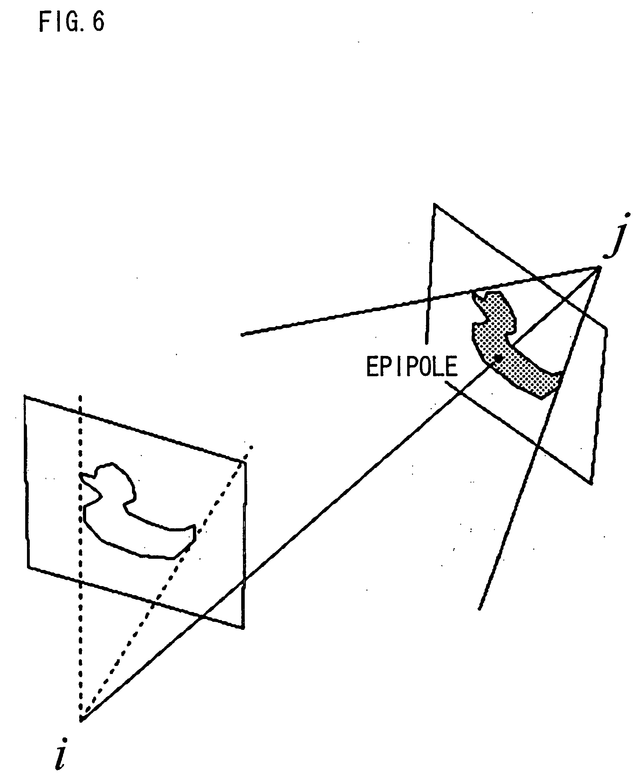

FIG. 6 shows a case in which the epipole of the point of view i when viewed from the image at the point of view j is located in the inside of the counter at the point of view j. At this time, the image of the silhouette cone is not composed of the two straight lines that are shown above, and the projection of the silhouette cone at the point of view j onto the image at the point of view i results in an overall plane. Further, when the epipole is located on the contour, the projection of the silhouette cone results in a semi-plane.

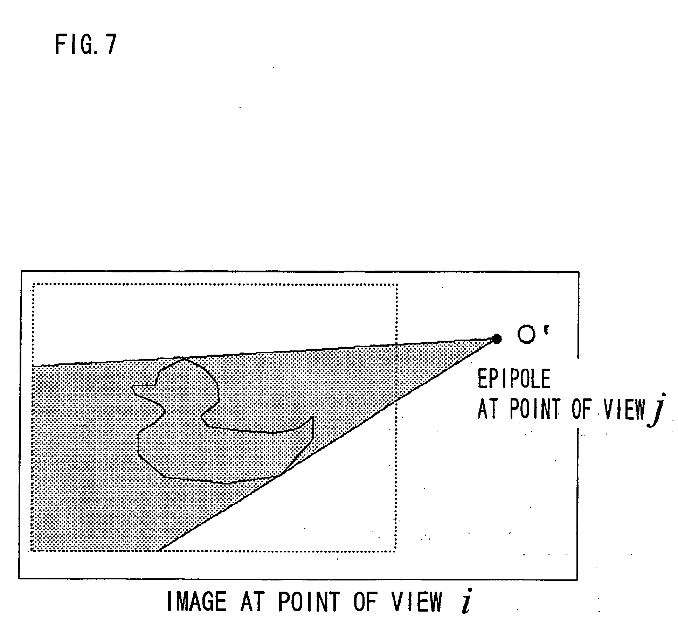

FIG. 7 is a view in which the contour of the body on the image at the point of view i is inscribed in two straight lines. This is a case in which when the image at the point of view i on the silhouette cone at the point of view j is composed of two straight lines, the silhouette cones at the two points of view i and j are superimposed. This is also applicable to an inverse case. That is, when the contour of the body is inscribed in two straight line on the image at the point of view i, the silhouette cones at the point of views i and j are superimposed when the image. at the point of view i of the silhouette cone at the point of view j is composed of the two straight lines. Thus, the positions of a point of view are determined such that a contour is inscribed in the two straight lines created by the contour at another point of view on images at all the points of view i = 1, ..., n.

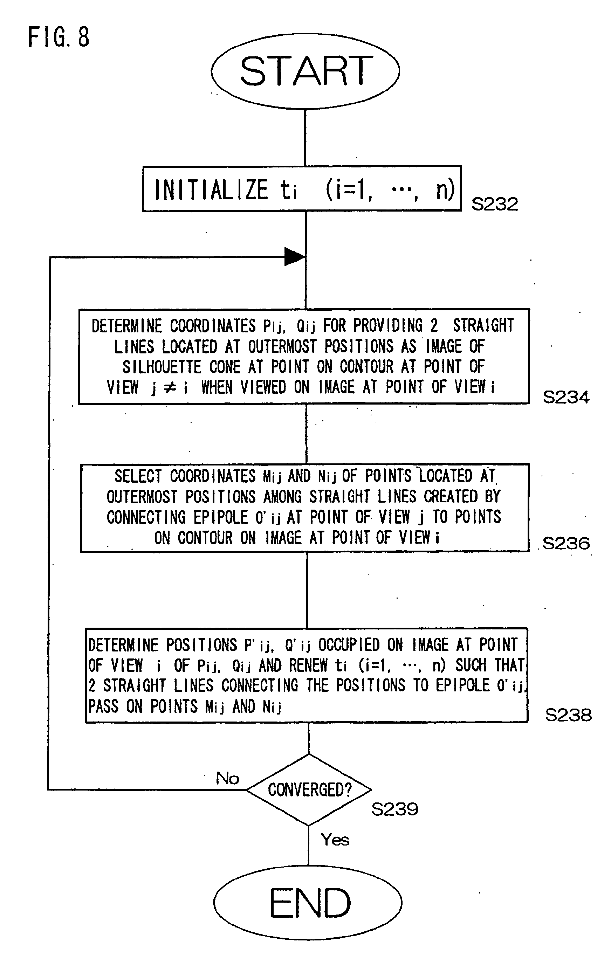

Next, the positions of respective points of view are determined by repeating calculation so as to achieve the aforementioned inscribing relationship between the contour and the two straight lines. FIG. 8 is a view showing algorithm for determining the positions of the camera 30 by a flowchart. In the algorithm, silhouette cones are superimposed at once from n sheets of photographed images and the positions of the camera 30 of the images. These positions are gradually determined by repeating the calculation of the positions of the camera 30 having photographed the respective images for achieving the positional relationship as shown in FIG. 5. How the positions of the camera 30 are determined will be described below in detail by means of the algorithm described in FIG. 7 using the flowchart of FIG. 8.

First, the coordinate transformation of image data from a reference coordinate system to the respective points of view i (i = 1, ..., n) is represented as follows

(Expression 1)

$$X_i = R_i x + t_i \tag{1}$$

Here, the attitude of each point of view, that is, a rotation matrix $R_i$ is already known, and what is determined is a translation vector $t_i$ (distance between the camera and the body).

First, an appropriate initial value is set to $t_i$ (i = 1, ..., n) (S232). When $t_i$ is given, the position of the epipole at other point of view is determined on an image at each point of view in the positional relationship as shown by a point O' of FIG. 7.

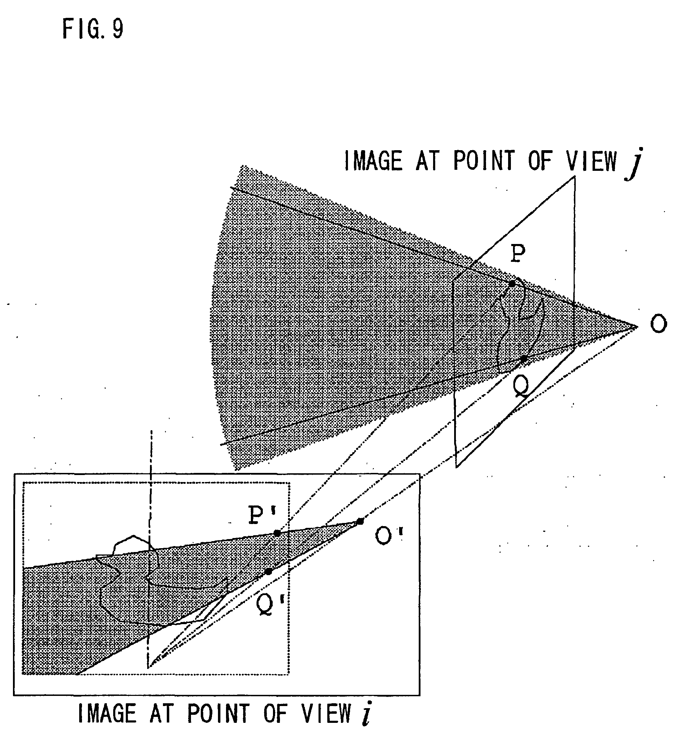

FIG. 9 shows two straight lines which are created when the silhouette cone of the contour at the point of view j is projected onto the surface of the image at the point of view i and the points P' and Q' on the contour for providing the two straight lines. When attitude information is further provided, all the straight lines connecting points on the contour at the point of view j to the center of projection $O_j$ are projected onto the image at the point of view i. What is determined is the two straight lines that are located outermost of the projected straight lines. Thus, as shown in FIG. 9, the two straight lines, which are created by the contour at the point of view on the image at the point of view i, and points $P_{ij}$ and $Q_{ij}$ for providing them are determined (S234). When the image on the silhouette cone is not composed of a region sandwiched between two straight lines as shown in FIG. 6, the combinations of the points of view i and j are excluded from a subject to be handled.

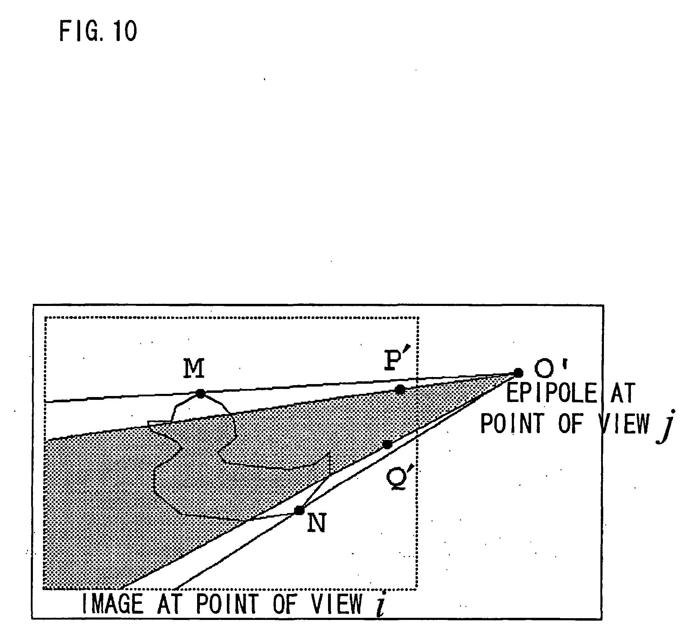

FIG. 10 is a view showing the two straight lines located outermost of the straight lines, which pass through an epipole and intersect a contour, and the points M and N where the two straight lines intersect the contour. As shown in FIG. 10, two points $M_{ij}$ and $N_{ij}$ are selected which provide the two outermost straight lines of the semi-straight lines which are created by connecting the epipole $O'_{ij}$ of the point of view j on the image at the point of view i to points of the contour on the image. When $O'_{ij}$ is located in the inside of the contour (including positions on the contour) on the image, the combinations of the points of view i and j are excluded from the subject to be handled (S236).

While $P_{ij}$ and $Q_{ij}$ are positions on the image at the point of view j, the positions obtained by projecting them onto the image at the point of view i are denoted by $P'_{ij}$ and $Q'_{ij}$. As shown in FIG. 10, when the points of view i and j are at proper positions each other, the two straight lines $O'_{ij}P'_{ij}$ and $O'_{ij}Q'_{ij}$ must pass through $M_{ij}$ and $N_{ij}$, respectively. $t_i$ and $t_j$ are renewed so that this is realized. The condition under which two straight lines pass through two points, respectively is represented by two linear equations as to $t_i$ and $t_j$. The condition is determined so as to satisfy this equation as to all of $t_i$ (i = 1, ..., n) (S238).

When the positions of the points of view are renewed as described above, the position of the contour which occupies the image of the silhouette cone changes (No at S239). Thus, the process returns to S234 and repeated so as to renew the positions of the point of views by determining all the points P, Q, M, and N again. The step is repeated until the positions are converged.

Note that process at S238 in the aforementioned flowchart of FIG. 8 is performed as described below, that is, $t_i$ is determined as described below so as to permit the two straight lines to pass through the contour.

First, a condition expression relating to the points of view i and j will be described. The coordinates in the coordinate system of the point of view j at the point $P_{ij}$ are represented by $P_{ij}$. The position of the image, at the point of view i at the point $P_{ij}$ was $P'_{ij}$. When the coordinates in the coordinate system at the point of view i at the point $P'_{ij}$ are written as $P'_{ij}$, it is shown as follows.

(Expression 2)

$$P'_{ij} = R_i R_j^{-1}(P_{ij}-t_j) + t_i \qquad (2)$$

The coordinates in the coordinate system at the point of view i at the epipole $O'_{ij}$ is $-R_i R_j^{-1} t_j + t_i$. This is written as $t = (t_1, t_2, t_3)$ for the sake of convenience. An image surface is set at the position of a focal distance f on a z-axis in parallel with the xy plane of the coordinate system at the point of view, and the coordinates of the image are shown using $(-u_0, -v_0, f)$ as a point of origin. Thus, a vector $O'_{ij}P'_{ij}$ can be written as $FR_i R_j^{-1}P_{ij}$ in the image coordinates of the coordinate system at the point of view i. F denotes a projection transformation matrix, and the coordinates are homogeneous coordinates. This is written as $P = (p_1, p_2, p_3)$. When the coordinates of the image at the point of view i at a point $M_{ij}$ is written as $m = (m_1, m_2)$, the condition under which a straight line $O'_{ij}P'_{ij}$ passes on the point $M_{ij}$ can be shown as follows.

(Expression 3)

$$J_{ij}^{(1)} \equiv f(-p_2 + p_3 m_2)t_1 + f(p_1 - p_3 m_1)t_2 +$$

$$[p_2(m_1-u_0) -p_1(m_2-v_0) -p_3(u_0 m_2 - m_1 v_0)]t_3 = 0$$

This expression is a linear expression of t, that is, $t_i$ and $t_j$. A similar condition expression can be derived also as to $Q_{ij}$ and $N_{ij}$, and this is shown by $J^{(2)}$. Then, $t_i$ for minimizing the following expression 4 is determined.

(Expression 4)

$$J = \sum_i \sum_{j=i} [(J_{ij}^{(1)})^2 + (J_{ij}^{(2)})^2].....(3)$$

Note that when an error is approximately analyzed, optimization can be performed with a clear ground.

When $t_i$ is set optionally as to all of i = 1, ... , n, the same result must be obtained even if all the points of view are moved together. To restrict the degree of freedom of it, the position of a point of view 1 is fixed ($t_1 \equiv (0, 0, 0)$). As described above, there are 2(n - 1) pieces of condition formulas as to one point of view. As to the point of view 1, there are 2n(n - 1) pieces of the condition formulas in total. This is because that while $t_1$ is fixed, restriction is applied to the remaining $t_i$. Since the case as shown in FIG. 6 in which no contour is obtained is excluded, when it is assumed that the number of the points of view in such a case is k pieces in total, the number of the condition formulas is 2n(n -1) - K.

In contrast, the number of unknowns is $t_i$ of the respective points of view i excluding the point of view 1, that is, the number is 3(n - 1) pieces. A vector of a 3(n - 1) degree, in which the unknowns are arranged, is shown by t, that is, t is shown by the following expression.

(Expression 5)

$$t = [\ t_2^T, t_3^T, ..., t_n^T\ ]^T \tag{4}$$

Thus, the condition formula can be written as follows by the coefficient matrix X of $(2n(n - 1) - k) \times 3(n - 1)$.

(Expression 6)

$$Xt = 0 \tag{5}$$

As described above, the absolute size of a body cannot be determined by the method in principle. To prescribe the degree of freedom of it, $|\ t\ | = 1$ is established. Eventually, t is determined as a proper vector corresponding to the minimum proper value of a matrix $X^TX$.

Note that as to the selection of a point on a contour line, the point is selected from the contour of the body in the processes shown at S234 and S236 shown in FIG. 8. That is, the contour is obtained by a pixel unit and the point is selected from the points of the pixel. This means that the position of a point is selected by a point which is quantized by the magnitude of the pixel.

<Formation of model of shape (S260 and S270)>

When positions of the camera can be determined, the three-dimensional shape of. a body can be formed again using the contour of the body. The existing shape-from-silhouettes algorithm is used for the calculation of it. A three-dimensional model is completed by obtaining the texture of the surface of the body from images and mapping the texture on the surface of a restored shape.

After the determination of points of view, the three-dimensional shape is restored, for example, as described below. First, volume data is created, and then triangular meshes are formed. The volume data is created by an octtree method (refer to (R. Szeliski "Rapid Octree Construction from Image Sequences" Computer Vision, Graphics, and Synthetic Image proxessing, 1993). The triangular meshes are made by applying the known marching cubes method to the thus obtained volume data, and further the smoothing of the apex of the mesh and the decimation thereof are performed.

<Example>

A result obtained by constructing the aforementioned system, packaging the aforementioned algorithm, and photographing a body will be described below.

First, the convergence of the algorithm will be described. In the performed results, the algorithm converged without fail and did not diverge even once. Table 1 shows the number of repetitions which was necessary for a sequence of images to converge.

(Table 1)

| Number of repetition | 1 | 2 | 3 | 4 | 5 | 6 | 7 | 8 | 9 | 10 |
|---|---|---|---|---|---|---|---|---|---|---|
| Frequency | 0 | 0 | 0 | 0 | 20 | 52 | 28 | 0 | 0 | 0 |

Table 1 records the number of times which was necessary to convergence and shows the frequency of the each number of time when an initial value was set at random and trials were performed 100 times. The sequence of images used contained 33 images a part of which is shown in FIG. 10. As shown in the table, the algorithm converged by the repetition of five to seven times.

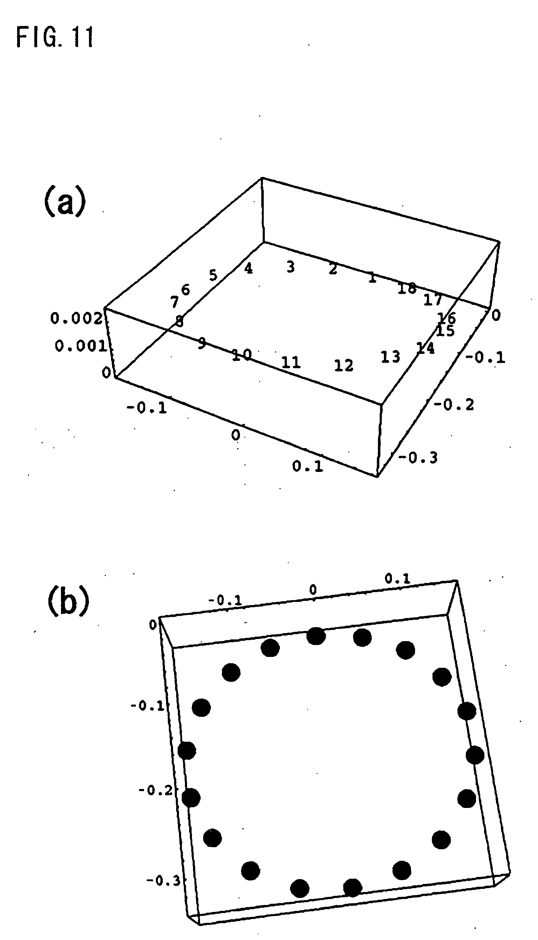

The approximate positioning accuracy of the method was examined using a sequence of images obtained by turning a body on a turntable. Since a camera was fixed and the body was turned in the turntable, when it was virtually assumed that images were obtained by fixing the body and by moving the camera, the motion of the virtual camera at that time had to draw a circle. The body was turned once by being turned 20° each time, from which 18 images were obtained. The body used in the experiment was a duck toy as shown in FIG. 3. FIG. 11 three-dimensionally shows the restored positions of the camera. It can be found that the positions are arranged approximately on a circumference and placed on a plane without a change in a height direction. While this rough verification, it can be found that the positions of points of view are correctly restored.

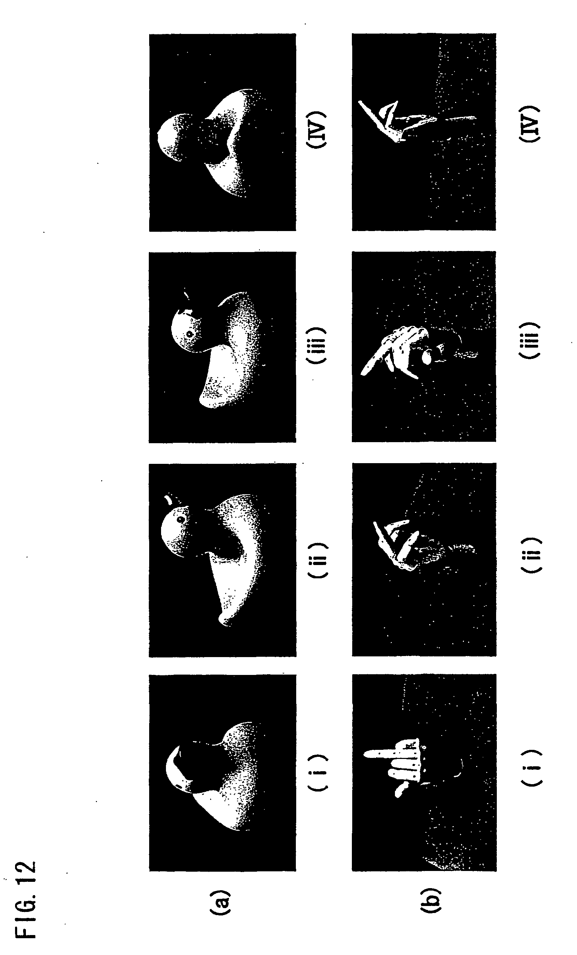

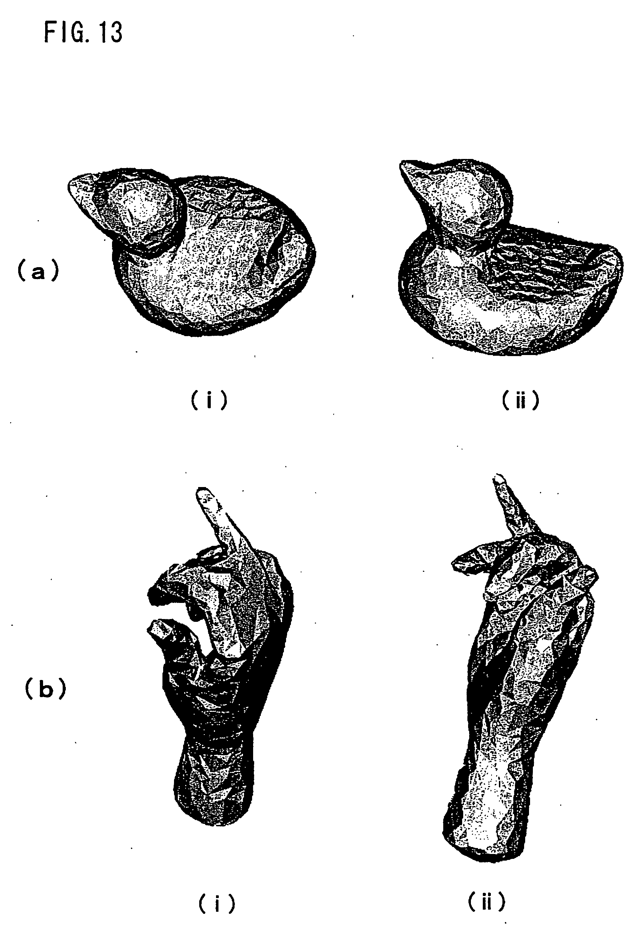

In this embodiment, the gyro sensor unit 34 was mounted on the camera main body 32, and the positions were estimated and further a model was synthesized. The duck model and a hand model which are shown in FIG. 12 were used as subjects. The accuracy of the gyro sensor used (Data Tech GU-3011) was such that a yaw angle was about $\pm 1°$ and a pitch roll angle was $\pm 0.5°$ or less. FIG. 12 shows each four images of 33 images and 28 images. FIG. 13 shows a result of restoration. Both of the models are restored approximately correctly. The duck model is restored well except that the concaved portion on the back is erroneously restored flat by a visual hull effect. In contrast, in the hand mode, the vicinity of the base of a finger on the back is connected to an adjacent finger and restored flat. It is supposed that this is a problem of the resolution of an image, that is, this is caused by that a silhouette could not extracted finely.

<Advantages of the present invention>

Algorithm for determining the positions of a camera using contours on the image of a body is shown when attitudes of the camera are known in a multi-point-of-view image. This method does not require to extract feature points and to correspond them to each other. A shape can be restored with a sufficient accuracy by measuring attitudes of a camera using a gyro sensor and estimating positions of the camera by the algorithm shown above.

In the method, an accuracy with which contours are extracted affects a restored shape in multiple. It is needless to say that other method, for example, a method of using a turntable also affects the accuracy of a restored shape. In the method, however, the accuracy of the extraction of contours first affects the accuracy of the estimation of a camera position and further affects the accuracy of a restored shape through the above accuracy. Accordingly, contours must be extracted with a pinpoint accuracy. In addition, it is preferable that optimization in the algorithm be performed in consideration of an error of a gyro sensor and an error in a quantized image.

Electronic business transactions, which are recently performed actively, ordinarily provide a commodity catalog on a web. Thus, a method of providing a greater quantity of information as to the figure and shape of a commodity with viewers has been examined. It is actually started to permit a commodity to be viewed from any optional direction because a single still picture on which a commodity is recorded is not sufficient. Customers can more get to know a commodity by viewing its figure from a desired direction on the browser of a web through a personal computer at home. In this case, the three-dimensional model of a body acting as a commodity is utilized.

A three-dimensional model utilized in this case may be synthesized as a CG model on a computer from the beginning. However, this procedure requires a lot of labor. Thus, there is required an apparatus for capturing the three-dimensional model of an actual body placed in front of a computer thereinto as disclosed in the method. As another application, there is conceived to electronically recording a Buddhist image, a sculpture, and the like. They can be viewed at any optional point of view by arranging them as three-dimensional models. Buddhists and the like are relatively large in size and difficult to be moved, and it is conceived that the environment in which they are measured is restricted. Accordingly, alternatives of a method of acquiring a three-dimensional model must be spontaneously limited. It is conceived that the method can be one of the alternatives due to the flexibility of it in that almost any subjects can be handled thereby and to its handiness.

Reference Numerals

| | |
|---|---|
| 10: | personal comp system |
| 12: | RS-232C port |
| 14 | image input board |
| 20: | gyro controller |
| 30: | camera |
| 32: | video camera main body |
| 34: | gyro sensor unit |
| 50: | body to be handled |

51:    image at point of view i
52:    image at point of view j
310:   image information
320:   camera attitude information
340:   contour information
350:   camera position information
360:   three-dimensional shape information
370:   three-dimensional model

## Claims

1. A three-dimensional model forming apparatus for forming a three-dimensional model from images of a body to be handled, comprising:

   a camera for acquiring images of the body to be handled;
   an attitude sensor for acquiring the attitude information of the camera when the images are acquired; and
   a processing means for storing and processing the images and the attitude information that have been acquired,
   wherein the processing means calculates the positions of the camera when the respective images are acquired from the plurality of images and the attitude information that have been acquired; and
   the three-dimensional model of the body to be handled is formed using the calculated positions of the camera and the contours of the body to be handled resulting from the acquired images.

2. A three-dimensional model forming apparatus according to claim 1, wherein the attitude sensor is a gyro sensor.

3. A three-dimensional model forming apparatus according to claim 1 or 2, wherein the processing for calculating the positions of the camera when the respective images are acquired from the plurality of images and the attitude information that have been acquired comprises the steps of:

   projecting the images of the contours of other image onto the respective images using the attitude information of the camera;
   calculating lines one ends of which start from the center of projection of the other image on the respective images and which come into contact with the contours;
   recalculating the positions of the camera so that the lines, which come into contact with the respective contours, are made equal to each other; and
   calculating the positions by repeating these steps until they are converged.

FIG. 1

PC

RS—232C PORT

IMAGE INPUT BOARD

SERIAL CABLE

GYRO CONTROLLER

10

20

12

14

GYRO SENSOR UNIT

34

NTSC CABLE

CAMERA

30

32

EP 1 207 496 A1

# FIG. 2

START

↓

ACQUISITION
OF IMAGE S200

↓

IMAGE INFORMATION
(1,2,...,n) 310

EXTRACTION
OF CONTOUR S220

↓

CAMERA ATTITUDE
INFORMATION
(1,2,...,n) 320

CALCULATION OF
CAMERA POSITION S230

↓

CONTOUR INFORMATION
(1,2,...,n) 340

CAMERA POSITION
INFORMATION
(1,2,...,n) 350

CALCULATION OF
THREE-DIMENSIONAL
SHAPE S260

↓

THREE-DIMENSIONAL
SHAPE INFORMATION 360

BONDING OF TEXTURE
ON SURFACE S270

↓

THREE-DIMENSIONAL
MODEL 370

END

FIG. 3

POINT OF VIEW $i$

POINT OF VIEW 1

30

POINT OF
VIEW $j$

50

FIG. 4

50

52

51

POINT OF VIEW $j$

POINT OF VIEW $i$

## FIG. 5

IMAGE AT POINT OF VIEW $j$

EPIPOLE

IMAGE AT POINT OF VIEW $i$

FIG. 6

EPIPOLE

*i*

*j*

FIG. 7

EPIPOLE
AT POINT OF VIEW $j$

IMAGE AT POINT OF VIEW $i$

FIG. 8

$$\text{START}$$

INITIALIZE $t_i$ $(i=1, \cdots, n)$  S232

DETERMINE COORDINATES $P_{ij}$, $Q_{ij}$ FOR PROVIDING 2 STRAIGHT LINES LOCATED AT OUTERMOST POSITIONS AS IMAGE OF SILHOUETTE CONE AT POINT ON CONTOUR AT POINT OF VIEW $j \neq i$ WHEN VIEWED ON IMAGE AT POINT OF VIEW $i$   S234

SELECT COORDINATES $M_{ij}$ AND $N_{ij}$ OF POINTS LOCATED AT OUTERMOST POSITIONS AMONG STRAIGHT LINES CREATED BY CONNECTING EPIPOLE $O'_{ij}$ AT POINT OF VIEW $j$ TO POINTS ON CONTOUR ON IMAGE AT POINT OF VIEW $i$   S236

DETERMINE POSITIONS $P'_{ij}$, $Q'_{ij}$ OCCUPIED ON IMAGE AT POINT OF VIEW $i$ OF $P_{ij}$, $Q_{ij}$ AND RENEW $t_i$ $(i=1, \cdots, n)$ SUCH THAT 2 STRAIGHT LINES CONNECTING THE POSITIONS TO EPIPOLE $O'_{ij}$ PASS ON POINTS $M_{ij}$ AND $N_{ij}$   S238

No ← CONVERGED?  S239

Yes

END

FIG. 9

IMAGE AT POINT OF VIEW *j*

P

O

Q

P'

O'

Q'

IMAGE AT POINT OF VIEW *i*

FIG. 10

M   P′   O′
EPIPOLE AT
POINT OF VIEW $j$

Q′

N

IMAGE AT POINT OF VIEW $i$

FIG. 11

(a)

(b)

FIG. 12

FIG. 13

(a)

(i)

(ii)

(b)

(i)

(ii)

## INTERNATIONAL SEARCH REPORT

| | International application No. |
|---|---|
| | PCT/JP01/03546 |

**A. CLASSIFICATION OF SUBJECT MATTER**
Int.Cl⁷ G06T1/00

According to International Patent Classification (IPC) or to both national classification and IPC

**B. FIELDS SEARCHED**

Minimum documentation searched (classification system followed by classification symbols)
Int.Cl⁷ G06T1/00

Documentation searched other than minimum documentation to the extent that such documents are included in the fields searched

| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US, 6038074, A (Ricoh Company), 14 March, 2000 (14.03.00), Full text; all drawings | 1-2 |
| A | Full text; all drawings & JP, 11-136575, A | 3 |
| X | JP, 10-23311, A (Canon Inc.), 23 January, 1998 (23.01.98), Full text; all drawings | 1-2 |
| A | Full text; all drawings (Family: none) | 3 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 30 May, 2001 (30.05.01) | 12 June, 2001 (12.06.01) |

| Name and mailing address of the ISA/ Japanese Patent Office | Authorized officer |
|---|---|
| Facsimile No. | Telephone No. |

Form PCT/ISA/210 (second sheet) (July 1992)